# EUROPÄISCHE PATENTSCHRIFT

(11) **EP 1 413 480 B1**
(45) Veröffentlichungstag und Bekanntmachung des Hinweises auf die Patenterteilung: **21.06.2006**
(21) Anmeldenummer: 03090363.7
(22) Anmeldetag: 23.10.2003
(51) Int. Cl.: B60P 7/08, B60R 21/06

(54) **Vorrichtung zur Sicherung von Ladungen**
Load securing device
Dispositif de fixation de charge

(30) Priorität: 23.10.2002 DE 20216610 U
(43) Veröffentlichungstag der Anmeldung: 28.04.2004
(73) Patentinhaber: Deutsche Post AG, 53175 Bonn (DE)
(72) Erfinder: Franck, Hermann, 27721 Ritterhude (DE)
(74) Vertreter: Neumann, Günter

(56) Entgegenhaltungen:
- DE-A- 10 118 427
- DE-A- 19 722 501
- DE-C- 19 853 361
- US-A- 5 110 172
- US-A- 5 533 773
- US-B1- 6 406 232

## Beschreibung

Die Erfindung betrifft eine Vorrichtung zur Sicherung von Ladungen auf Transportflächen, wie räumlich geschlossenen Transportflächen von Nutzfahrzeugen und Anhängern sowie von Transportcontainern.

Ladungssicherungen für den genannten Zweck sind in vielfältigen Ausführungsformen bekannt.

Die DE 36 13 498 A1 beschreibt einen Fahrzeugaufbau mit seitlichen Spannnetzen zur Ladungssicherung, bestehend aus senkrechten und waagerechten quer vorgespannten Gurten. Die waagerechten Gurte sind mit einem ihrer Enden an einem Aufbaupfosten und mit ihrem anderen Ende an einer gemeinsamen, an einem anderen Aufbaupfosten drehbar, lösbar und verriegelbar angeordneten Welle befestigt. Mittels der Wickelwelle lassen sich die waagerechten Gurte gleichzeitig spannen, während im ungespannten Zustand die waagerechten Gurte von einem der Aufbaupfosten abhängen. Als problematisch erweist sich bei diesem Fahrzeugaufbau mit seitlichen Spannnetzen die bei dem von den Aufbaupfosten abhängenden Spannnetz nicht auszuschließende Unfallgefahr und die nicht gegebene Möglichkeit der Ladungssicherung entsprechend dem Fortschritt der Beladung beziehungsweise des erreichten Beladezustandes.

Die DE 199 15 514 C1 offenbart ein Sicherungsnetz, insbesondere ein Sicherungszurrnetz zum Sichern von Ladungen im Zuge ihres Transportes auf Transportflächen von zum Beispiel LKW-Zuganhängern oder dergleichen. Diese technische Lösung bezieht sich auf Transportflächen mit einem eine geschlossene Sicherungsfläche definierenden Netzwerk aus sich kreuzenden Maschengurten. Die Sicherungsfläche weist hierbei an zumindest zwei sich gegenüberliegenden Seiten randseitig an das Netzwerk angeschlossene Losenden-Verbindungsgurte und Festenden-Verbindungsgurte zur Befestigung des Netzwerkes an der Transportfläche auf. Die Festenden-Verbindungsgurte weisen dabei an der einen Seite des Netzwerkes jeweilige Losenden-Spannvorrichtungen zur längenvariablen Festlegung des Netzwerkes an der Transportfläche auf. Die Handhabung dieses Sicherungsnetzes erweist sich als verhältnismäßig kompliziert, da es über die zu sichernde geschlossene Sicherungsfläche gebracht werden muss und erfordert beim Spannen eine nicht unerhebliche manuelle Kraftanstrengung. Hinzu kommt, dass es kostenaufwendig herstellbar ist.

Aus der US 6,406,232 B1 geht eine einrollbare Ladungsabdeckvorrichtung hervor, bei der eine rechteckige Abdeckung auf einem federgelagerten Zylinder aufgewickelt wird und bei der federgelagerte Zylinder mittels Haltewinkeln lösbar befestigt ist.

Die gattungsgemäße DE 102 18 427 A1 offenbart eine Netzwand zur Schaffung einer Laderaumsicherung auf einem Fahrzeug-Ladeboden. Das Netz wird mittels einer Querstrebe an seitlich der Transportfläche angeordneten Führungselementen gegen Federkraft höhenverstellbar geführt, wobei der untere Rand des Netzes an der Laderaumkante befestigt ist und die Führungselemente eine U-förmiges Profil aufweisen. Mit dieser technischen Lösung verbindet sich jedoch das Problem, das Behinderungen bei der Be- und Entladung des Laderaumes nicht ausgeschlossen sind.

Aufgabe der Erfindung ist es daher, eine verbesserte Vorrichtung zur Sicherung von Ladungen auf Transportflächen bereitzustellen, die bei geringem Platzbedarf leicht handhabbar ist, den Zugang zum Laderaum ohne Hindernisse ermöglicht, kostengünstig hergestellt werden kann und eine Ladungssicherung entsprechend dem jeweiligen Beladezustand ermöglicht.

Erfindungsgemäß wird die Aufgabe durch eine Vorrichtung mit den Merkmalen des Anspruches 1 gelöst. Vorteilhafte Ausgestaltungen der erfindungsgemäßen Vorrichtung ergeben sich aus den Merkmalen der Unteransprüche 2 bis 5.

Mit der erfindungsgemäßen Vorrichtung verbindet sich der Vorzug einer einfach handhabbaren und hindernisfreien Ladungssicherung parallel zum jeweils erreichten Beladefortschritt beziehungsweise Beladezustand. Durch die Möglichkeit der Herausnahme der Führungselemente aus der Transportfläche kann die Vorrichtung nach Bedarf eingesetzt werden. Sie ist nicht zwingend an eine bestimmte Transportfläche gebunden, was sich wiederum kostenmäßig vorteilhaft auswirkt.

Die Erfindung sieht vor, das Absperrelement an einer Beladevorrichtung zu befestigen. Diese Verbindung ermöglicht es, die vertikale Position des Sicherungsnetzes mit der Position der Beladevorrichtung entsprechend dem Fortschritt der Beladung zu verändern und auf diese Weise ein Heraus- oder Herunterfallen von Ladegut schon während des Beladevorganges zu vermeiden. Die Verbindung der erfindungsgemäßen Vorrichtung mit der Beladevorrichtung bietet zugleich die Möglichkeit, die Ladungssicherung zu automatisieren.

Im folgenden soll die Erfindung an Hand von Zeichnungen näher erläutert werden. Es zeigen
- **Figur 1**: in schematischer Darstellung die Vorderansicht eines Laderaumes mit Sicherungsnetz im ungespannten Zustand,
- **Figur 2**: in schematischer Darstellung die Vorderansicht eines Laderaumes mit Sicherungsnetz im gespannten Zustand,
- **Figur 3**: in schematischer Darstellung die Seitenansicht einer Fördervorrichtung mit einem Container während des Beladevorganges,
- **Figur 4**: in schematischer Darstellung die Seitenansicht einer Fördervorrichtung mit einem beladenen Container.

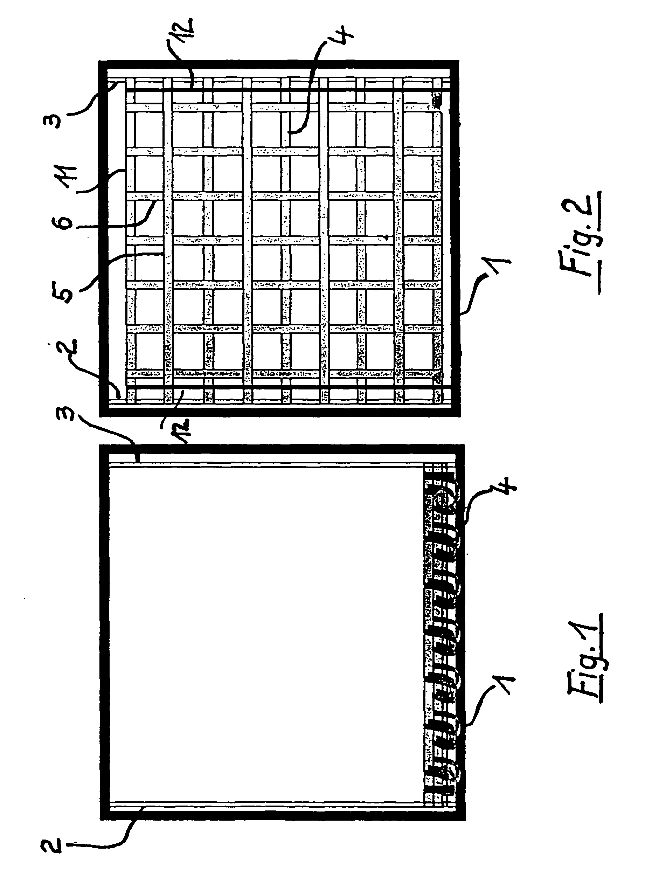

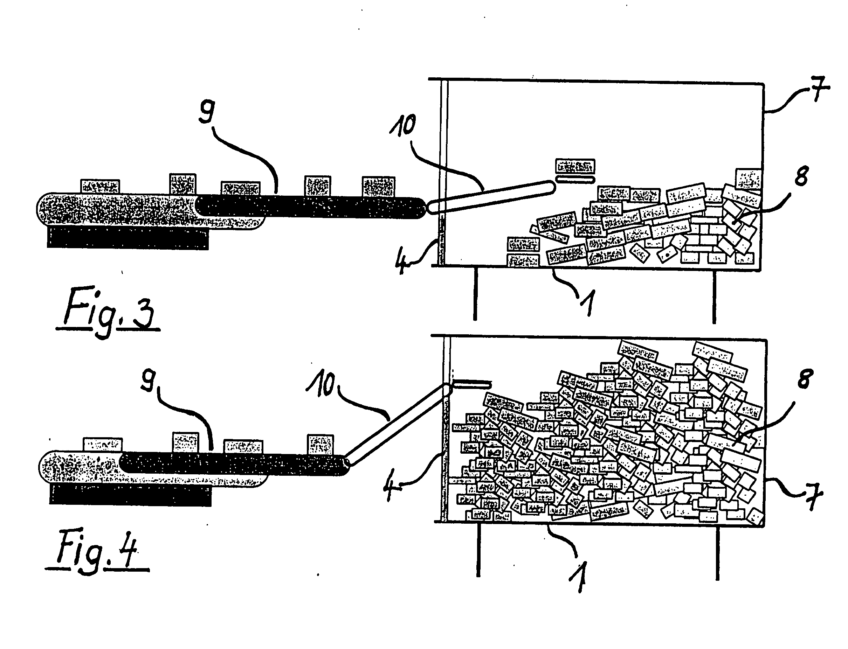

Von dem zu sichernden geschlossenen Laderaum zeigt **Fig. 1** die Transportfläche 1 mit den seitlich auf ihr vertikal angeordneten Führungselementen 2 und 3, die im vorliegenden Beispiel als Hutschienen ausgebildet sind. Die Führungselemente 2 und 3 können auch anderweitig ausgeführt sein, beispielsweise stab- oder rohrförmig. Sie können in ihrem Querschnitt auch ein einseitig offenes Kasten- oder U-Profil aufweisen mit einem nach innen gerichteten Schenkelende oder mit beidseitig nach innen gerichteten Schenkelenden. Die Führungselemente 2 und 3 können an eigens dafür montierten Halterungen oder auch an seitlich vorhandenen Anschlagpunkten der Transportmittel, wie beispielsweise eines Containers, angeordnet sein. Das hier als Absperrelement verwendete Sicherungsnetz 4 befindet sich im ungespannten Zustand und ist mit den Enden seiner horizontal verlaufenden Gurte 5 mittels in den Hutschienen verlaufenden Schiebeelementen in den Führungselementen 2 und 3 verschiebbar angeordnet. Das Sicherungsnetz 4 kann auch mittels Ringen, die an den horizontal verlaufenden Gurten 5 befestigt sind, zwischen den Führungselementen 2 und 3 höhenverschiebbar angebracht werden. Insbesondere in Abhängigkeit von der Art des Ladegutes können als Absperrelement auch eine Tuchbahn oder eine Gewebefolie eingesetzt werden. Die vertikal verlaufenden Gurte 6 des Sicherungsnetzes 4 sind deutlich sichtbar nicht gespannt. Das Sicherungsnetz 4 ist mittels hier nicht sichtbarer Karabinerhaken mit einer auf der Transportfläche 1 angeordneten Gleitschiene verbunden.

**Fig. 2** stellt den von der Ladeseite gesicherten Laderaum mit gespanntem Sicherungsnetz 4 dar, so dass beispielsweise während eines Transportes das Ladegut gesichert ist und nicht von der Transportfläche 1 fallen kann. Das Sicherungsnetz 4 wird durch sich kreuzende horizontal und vertikal verlaufende Gurte 5 und 6 gebildet, die an den jeweiligen Kreuzungspunkten miteinander vernäht oder vernietet sind. An Stelle der Gurte 5 und 6 können auch an den Kreuzungspunkten miteinander verbundene Seile verwendet werden.

Eine Ausführungsform der Erfindung ist in den **Fig. 3** und **Fig. 4** dargestellt. In diesem Beispiel wird ein Transportcontainer 7 mit Stückgut 8 beladen. Das Stückgut 8 wird mit Hilfe eines Teleskopförderers 9 über einen daran angeordneten Teleskoparm 10 in den Transportcontainer 7 gefördert. Am Teleskoparm 10 ist das Sicherungsnetz 4 mit seiner oberen Haltevorrichtung 11, wofür beispielsweise ein Rohr verwendet werden kann, lösbar verbunden. Durch die Verbindung des Sicherungsnetzes 4 mit dem Teleskoparm 10 wird das Sicherungsnetz 4 mit dem Teleskoparm 10 in der Breite der Ladeöffnung der Transportfläche 1 in die Höhe gezogen. Damit ist parallel zum gesamten Verlauf des Beladevorganges das Stückgut 8 vor Herausfallen gesichert. Das hat den Vorteil, dass das Stückgut 8 zu jedem Zeitpunkt ohne weitere zusätzliche Maßnahmen zu dessen Sicherung abtransportiert werden kann. Zum Ende des Beladevorganges, wie in **Fig. 4** dargestellt, wird das Sicherungsnetz 4 vom Teleskoparm 10 gelöst und in den Führungselementen 2 und 3, die an den Anschlagpunkten des Containers angeordnet sind, festgestellt. Zu diesem Zweck können in die in den Führungselementen 2 und 3 vorgesehenen Bohrungen Bolzen gesteckt werden. Die Verbindung des Sicherungsnetzes 4 mit einer Beladevorrichtung ermöglicht zudem die Automatisierung von Beladevorgängen.

### BEZUGSZEICHENAUFSTELLUNG

- 1: Transportfläche
- 2: Führungselement
- 3: Führungselement
- 4: Sicherungsnetz
- 5: Gurt
- 6: Gurt
- 7: Transportcontainer
- 8: Stückgut
- 9: Teleskopförderer
- 10: Teleskoparm
- 11: Haltevorrichtung
- 12: Gummiexpander

## Patentansprüche

1. Vorrichtung zur Sicherung von Ladungen, wie Stückgut (8), auf einer Transportfläche (1) mit einem Absperrelement, beispielsweise einem Sicherungsnetz (4), das an seitlich der Transportfläche (1) angeordneten Führungselementen (2; 3), beispielsweise einer Hutschiene, einem Rohr oder einem in seinem Querschnitt einseitig offenen zur Ladeöffnung gerichteten Kasten- oder U-Profil mit mindestens einem nach innen gerichteten Schenkelende, wobei das Absperrelement an den Führungselementen (2; 3) vertikal verschieb- und in einer frei wählbaren Position feststellbar ist, und an seinem oberen Ende an einer waagerecht angeordneten oberen Haltevorrichtung (11) befestigt ist, **dadurch gekennzeichnet, dass**
- das untere Ende des Absperrelementes mittels lösbarer Verbindungen an einer unteren Haltevorrichtung befestigt ist, die an der längs offenen Seite der Transportfläche (1) verlaufenden Kante angeordnet ist oder das Absperrelement an einer längs der offenen Seite der Transportfläche (1) drehbar, lösbar und arretierbar angeordneten Wickelwelle befestigt ist.
- die obere Haltevorrichtung (11) des Absperrelementes an einer Beladeeinrichtung lösbar befestigt ist, entsprechend dem Beladefortschritt mit der Beladeeinrichtung vertikal nach oben führbar ist und das Absperrelement bei Beendigung des Beladevorganges in der an den Führungselementen (2; 3) erreichten Position festgestellt ist oder sich selbst feststellt.

2. Vorrichtung nach Anspruch 1, **dadurch gekennzeichnet, dass** das Absperrelement eine Tuchbahn oder eine Gewebefolie ist.

3. Vorrichtung nach einem der Ansprüche 1 oder 2, **dadurch gekennzeichnet, dass** die Wickelwelle an eigens montierten Halterungen, besonders bevorzugt an seitlichen Anschlagpunkten der Transportvorrichtung (1), wie eines Containers, angebracht ist.

4. Vorrichtung nach einem der Ansprüche 1 bis 3, **dadurch gekennzeichnet, dass** die Beladeeinrichtung ein Teleskopförderer (9), mit einem Teleskoparm (10) ist.

5. Vorrichtung nach einem der Ansprüche 1 bis 4, **dadurch gekennzeichnet, dass** zwischen dem oberen waagerechten Teil der Absperrvorrichtung und dem äußeren Ende der Transportfläche (1) mindestens ein das Absperrelement zusätzlich verstärkendes Federelement, vorzugsweise ein Gummiexpander (12), vertikal angeordnet ist.

## Claims

1. Device for securing loads such as packets (8) on a transport surface (1) with a blockade element, for instance a safety net (4) which is attached to guides (2; 3) on the side of the transport surface (1), for instance a mounting rail, a tube or a box or u-profile open to the side of the load with at least one side end facing inward, whereby the blockade element can be attached to the guide elements (2; 3) vertically shifted and in a selected position and on its upper end is attached to a horizontal upper holder (11), **characterized by**,
- The lower end of the blockade element being attached to a lower holder by means of detachable connections; the holder is attached to the long, open side edge of the transport surface (1) or the blockade element is attached to a pivotable, detachable and adjustable shaft on the long open side of the transport surface (1)
- The upper holder (11) of the blockade element is attached to a detachable loading device, which can be moved upwards vertically with the loading device in accordance with the progress of the loading and the blockade element is attached to the guides (2; 3) in the final position when the loading is ended or it holds itself.

2. Device in accordance with claim 1, **characterized by**, the blockade element being a length of cloth or commercial foil.

3. Device in accordance with either claim 1 or 2, **characterized by**, the shaft being attached to specially mounted holders, most preferably attached to the suspension points of the transportation device (1), such as a container.

4. Device in accordance with one of claims 1 to 3, **characterized by**, the loading equipment is a telescoping belt (9) with a telescoping arm (10).

5. Device in accordance with one of claims 1 to 4, **characterized by**, at least one additional reinforcing feathering element, preferably a rubber-expander (12) being vertically attached between the upper horizontal part of the blockade device and the outer end of the transport surface (1).

## Revendications

1. Dispositif destiné à bloquer des chargements, comme des marchandises de détail (8), sur une surface de transport (1) à l'aide d'un élément de blocage, par exemple un filet de sécurité (4) qui est fixé sur des éléments de guidage (2; 3) disposés latéralement sur la surface de transport (1), par exemple un profilé chapeau, un tube ou un profilé en U ou en caisson dirigé vers l'orifice de chargement et ouvert d'un côté dans sa section transversale, comportant au moins une extrémité de côté dirigée vers l'intérieur, l'élément de blocage pouvant être déplacé verticalement sur les éléments de guidage (2; 3) ou immobilisé sur ceux-ci dans une position pouvant être choisie librement, et qui est fixé à son extrémité supérieure à un dispositif de maintien (11) supérieur disposé horizontalement, **caractérisé en ce que**
- l'extrémité inférieure de l'élément de blocage est fixée au moyen de fixations détachables à un dispositif de maintien inférieur qui est disposé sur l'arête située le long du côté ouvert de la surface de transport (1), ou l'élément de blocage est fixé sur un arbre d'enroulement disposé le long du côté ouvert de la surface de transport (1) de façon à pouvoir tourner, être enlevé ou bloqué,
- le dispositif de maintien supérieur (11) de l'élément de blocage est fixé sur un dispositif de chargement de façon à pouvoir être enlevé, peut être guidé verticalement vers le haut avec le dispositif de chargement en fonction de la progression du chargement et, une fois le chargement terminé, l'élément de blocage est immobilisé ou s'immobilise lui-même dans la position atteinte au niveau des éléments de guidage (2; 3).

2. Dispositif selon la revendication 1, **caractérisé en ce que** l'élément de blocage est un écran de toile ou une bâche en tissu.

3. Dispositif selon l'une quelconque des revendications 1 ou 2, **caractérisé en ce que** l'arbre d'enroulement est placé sur des fixations installées à cet effet, notamment de préférence sur des points d'ancrage latéraux du dispositif de transport (1), comme ceux d'un conteneur.

4. Dispositif selon l'une quelconque des revendications 1 à 3, **caractérisé en ce que** le dispositif de chargement est un convoyeur télescopique (9) muni d'un bras télescopique (10).

5. Dispositif selon l'une quelconque des revendications 1 à 4, **caractérisé en ce qu'**au moins un élément élastique renforçant en outre l'élément de blocage, de préférence un sandow élastique (12) est disposé verticalement entre la partie horizontale supérieure du dispositif de blocage et l'extrémité extérieure de la surface de transport (1).
